(19) **Europäisches Patentamt / European Patent Office / Office européen des brevets**

(11) **EP 1 623 258 B1**

(12) **FASCICULE DE BREVET EUROPEEN**

(45) Date de publication et mention
de la délivrance du brevet:
**07.03.2012 Bulletin 2012/10**

(21) Numéro de dépôt: **04742864.4**

(22) Date de dépôt: **07.05.2004**

(51) Int Cl.:
*G09G 3/00* (2006.01)    *G09G 5/02* (2006.01)
*H04N 9/31* (2006.01)    *G02B 7/00* (2006.01)

(86) Numéro de dépôt international:
**PCT/FR2004/050185**

(87) Numéro de publication internationale:
**WO 2004/102245 (25.11.2004 Gazette 2004/48)**

(54) **SYSTEME DE PROJECTION D IMAGES AVEC IMAGEUR DOTE D UNE ROUE COLOREE AYANT PLUSIEURS SOUS-ENSEMBLES DE SEGMENTS COLORES ET APPAREIL DE PROJECTION CORRESPONDANT**

BILDPROJEKTIONSSYSTEM MIT ABBILDUNGSVORRICHTUNG MIT EINEM FARBRAD MIT MEHREREN TEILMENGEN GEFÄRBTER SEGMENTE UND ENTSPRECHENDE PROJEKTIONSVORRICHTUNG

IMAGE PROJECTION SYSTEM WITH IMAGER PROVIDED WITH A COLOUR WHEEL HAVING A PLURALITY OF SUB-SETS OF COLOURED SEGMENTS, AND CORRESPONDING PROJECTION APPLIANCE

(84) Etats contractants désignés:
**DE FR GB**

(30) Priorité: **09.05.2003 FR 0305652**

(43) Date de publication de la demande:
**08.02.2006 Bulletin 2006/06**

(73) Titulaire: **Thomson Licensing**
**92130 Issy-les-Moulineaux (FR)**

(72) Inventeurs:
• **SCHUBERT, Arno**
  **F-35250 CHEVAIGNE (FR)**
• **BOREL, Thierry**
  **F-35530 NOYAL SUR VILAINE (FR)**

• **SARAYEDDINE, Khaled**
  **F-35410 NOUVOITOU (FR)**
• **THOLLOT, Julien**
  **F-69420 TREVES (FR)**

(74) Mandataire: **Le Dantec, Claude**
**Technicolor**
**1-5 rue Jeanne d'Arc**
**92130 Issy-les-Moulineaux (FR)**

(56) Documents cités:
**EP-A- 0 749 250       US-A- 4 527 186**
**US-A- 6 147 720       US-A1- 2002 109 821**
**US-B1- 6 280 034**

EP 1 623 258 B1

## Description

L'invention se rapporte aux systèmes d'illumination séquentielle d'un imageur ou SPL « Spatial Light Modulator » en langue anglaise utilisés dans certains systèmes de projection et/ou de visualisation d'images.

Les systèmes de projection et/ou de visualisation d'images communément appelés projecteurs ou rétroprojecteurs selon que la projection se fait depuis l'avant de l'écran pour les projecteurs, ou que la projection se fait par l'arrière pour les rétroprojecteurs, fonctionnent selon le même principe. Un système d'illumination éclaire de manière uniforme un ou plusieurs imageurs comprenant un réseau de pixels, par exemple à cristaux liquides sur substrat en silicium ou LCOS « Liquid Cristal On Silicon » en langue anglaise, à micro-mirroirs ou DMD « Digital Micro-mirror Device/ Display » en langue anglaise, ou à cristal liquide transmissif HTPS « High Temperature Poly Silicon » en langue anglaise, disposés par exemple en lignes et en colonnes sur un substrat formant une matrice active, notamment en silicium. La lumière issue du système d'illumination est modulée après passage au travers du ou des imageur(s) dans le cas des imageurs transmissifs ou après réflexion sur le ou les imageur(s) dans le cas des imageurs réflectifs, par exemple LCOS ou DMD. La lumière ainsi modulée est ensuite projetée sur un écran au travers d'un objectif de projection. Pour générer des images en couleur, on illumine le ou les imageurs avec un ou des faisceaux de lumière colorée, généralement Rouge, Verte ou « Green » en langue anglaise, et Bleue (RGB).

Certains systèmes de projection et/ou de visualisation d'images comprennent trois imageurs, chacun des imageurs étant illuminé par un faisceau de lumière colorée correspondant à une des trois couleurs primaires RGB. Ces systèmes de visualisation d'images à trois imageurs sont complexes, il faut en effet recombiner les trois faisceaux de lumière colorée qui ont traversé ou ont été réfléchis sur les imageurs pour ne composer qu'un seul faiseau de lumière modulée prêt à être projeté sur un écran. Outre le nombre d'imageurs utilisés, ces systèmes de visualisation d'images nécessitent l'emploi d'éléments optiques encombrants et couteux. Il existe des systèmes de projection et/ou de visualisation d'images comprenant deux imageurs, comme par exemple le sytème de projection d'images décrit dans le brevet US5863125 d'IBM. Dans ce document, chaque imageur est alternativement illuminé d'un faisceau de lumière colorée, de manière à ce que l'adressage électronique des données pour écriture des pixels d'une trame ainsi que la stabilisation desdits pixels liée au temps de réponse des cristaux liquides, puisse être effectué sur l'imageur qui n'est pas illuminé. On qualifie de période de temps mort « dead-time » en langue anglaise cette période, de l'ordre de quelques millisecondes, pendant laquelle un imageur ne peut être illuminé. Le système de projection d'images décrits dans le document d'IBM a pour avantage de gérer ce temps mort, cependant, il demeure complexe et couteux par la présence des deux imageurs. De plus les imageurs de type LCOS « Liquid Cristal On Silicon » en langue anglaise, ou DMD « Digital Micro-mirror Device/Display » en langue anglaise par exemple présentent des périodes de temps mort moins importantes qu'auparavant, les imageurs de type DMD peuvent en effet opérer à des fréquences élevées, supérieurs à 400 Hz par exemple.

On s'oriente ainsi depuis quelques années vers des systèmes de projection d'images à un seul imageur ou mono-imageur, « mono-valve » en langue anglaise, de type transmissif ou réflectif, moins encombrants et moins coûteux que les systèmes de projection d'images comprenant plusieurs imageurs.

Pour générer des images en couleur, les systèmes de projection de ce type affichent séquentiellement des images de couleurs différentes sur l'écran, généralement les trois couleurs primaires rouge, verte et bleue RGB (« Red, Green, Blue » en langue anglaise). Ces systèmes de projection d'images comprennent généralement des dispositifs d'illumination pour illuminer l'unique imageur d'une lumière alternativement rouge, verte et bleue par l'emploi de roues colorées « Color Wheel » en langue anglaise par exemple. Ces. roues colorées comprennent généralement un segments rouge, un segment vert, et un segment bleu, R, G, B transmissifs, par l'emploi de filtres colorés par exemple, ou réflectifs. Les données vidéo commandant l'écriture des pixels de l'imageur sont synchronisées avec la couleur d'illumination de l'imageur afin de former une image présentant le moins de défauts possible pour le spectateur. Cependant les systèmes de projection et/ou de visualisation d'images à unique imageur de ce type ont certains désavantages par rapport aux systèmes à plusieurs imageurs. Par exemple, l'imageur doit opérer à des fréquences élevées, généralement trois fois la fréquence des images pour une roue colorées à trois segments de couleurs primaires, soit au moins 150 à 180Hz, et plus généralement n fois la fréquence des images lors de l'emploi d'une roue colorée à n segments de couleurs primaires. De plus, étant donné qu'une seule couleur est affichée à la fois, une part importante du flux lumineux issu de la source lumineuse est perdue. Ainsi, pour améliorer la luminosité des images projetées, certaines roues colorées comprennent un segment blanc comme par exemple le dispositif décrit par Texas Instrument dans le brevet US5233385. Ce dispositif permet d'afficher des images plus lumineuses, au détriment de la qualité des couleurs qui seront désaturées (moins vives) en raison de la présence d'une lumière polychromatique d'aspect blanche. Un autre inconvénient lié à l'affichage séquentiel d'images de couleurs différentes sur un écran est la perception par le spectateur de la décomposition ou séparation des couleurs primaires RGB lorsque par exemple certains objets de l'image bougent rapidement ou lors d'un brusque mouvement de la tête, un clignotement d'yeux, saccades occulaires, ou toute autre variation brusque des conditions d'observation. Ce phénomène de rupture de couleur, appellé « Color Break-up » en langue anglaise, se manifeste également pour des images fixes, par exemple quand les yeux du spectateur balayent rapidement l'écran ou bien pour des images qui bougent rapidement avec un observateur fixe. Un des moyens pour réduire ce phénomène de « color break-up » en langue anglaise, est d'augmenter la fréquence d'affichage et/ou d'illumination séquentielle de l'imageur. Certaines roues colorés comprennent six segments de couleurs par exemple sous la forme de deux sous-ensembles coplanaires de trois segments colorés RGB comme décrit dans le brevet américain de Texas Instrument US5448314. La fréquence d'affichage et/ou d'illumination séquentielle sur l'imageur est ainsi doublée, néanmoins les transitions d'une illumination rouge vers une illumination verte puis bleue demeurant brusques, le phénomène de « color break-up » en langue anglaise est atténué mais reste encore bien visible pour certains spectateurs plus sensibles que d'autres à ce phénomène.

Les documents de brevet US 6 17 720, US2002/0109821 et EP 0 749 250 divulguent un système de projection avec l'inconvénient de la présence d'un phénomène de « colour break up ».

Un but de l'invention est d'éviter ces inconvénients. L'invention est définie dans les revendications 1 et 10.

A cet effet, l'invention concerne un système d'illumination séquentielle d'un imageur comprenant une source émettant en direction de l'imageur un faisceau de lumière polychromatique dans le domaine des longueurs d'ondes comprenant au moins le rouge, le vert, et le bleu, des moyens optiques pour répartir uniformément la lumière de la source sur la surface utile de l'imageur, une roue colorée comprenant au moins deux sous-ensembles coplanaires de segments transmissifs, positionnée de manière à ce que l'un au moins de ces segments coupe ledit faisceau, montée sur des moyens de rotation de manière à faire défiler séquentiellement lesdits segments au niveau de la zone de coupure dudit faisceau, chaque sous-ensemble de segments comprenant trois segments de couleurs différentes, dont la teinte, la saturation, la transmissivité, et la taille sont adaptées pour composer un blanc de référence lorsqu'ils défilent séquentiellement au niveau de ladite zone de coupure, la roue colorée comprenant au moins un sous-ensemble de couleurs primaires comprenant un segment transmettant dans le domaine des longueurs d'ondes du rouge, un segment transmettant dans le domaine des longueurs d'ondes du vert, et un segment transmettant dans le domaine des longueurs d'ondes du bleu, caractérisé en ce que ladite roue colorée comprend au moins un sous-ensemble de segments coplanaires de couleurs composées comprenant un segment jaune et transmettant au moins en partie à la fois dans les domaines des longueurs d'ondes du rouge et du vert, un segment cyan et transmettant au moins en partie à la fois dans les domaines des longueurs d'ondes du vert et du bleu, et un segment magenta et transmettant au moins en partie à la fois dans les domaines des longueurs d'ondes du rouge et du bleu, aucune desdites couleurs composées desdits segments pris isolément ne générant une teinte blanche la longueur d'onde du rouge étant supérieure à 600 nanomètres; la longueur d'onde du bleu étant inférieure à 500 nanomètres ; et la longueur d'onde du vert étant comprise entre 520 et 564 nanomètres. Un avantage de la présence du sous-ensemble de segments de couleurs composées est que chaque segment de couleurs composées est équivalent à deux segments de couleurs primaires de même dimensions. Ainsi une roue colorée comprenant par exemple un sous-ensemble de trois segments de couleurs primaires et un sous-ensemble de trois segments de couleurs composées, tous les segments ayant la même dimension, est équivalente à une roue comprenant virtuellement neuf segments de couleurs primaires de dimensions égales. Il en résulte un gain de luminosité de l'ordre de 50%. De plus, la roue colorée du dispositif d'illumination comprend par exemple six segments colorés de couleurs différentes, lesquels, lorsque la roue est mise en rotation, coupent séquentiellement le faisceau de lumière polychromatique émis par la source lumineuse de telle sorte que l'imageur est séquentiellement illuminé selon une fréquence double par rapport à la fréquence d'illumination d'un dispositif comprenant une roue colorée avec trois segments colorés. L'augmentation de la fréquence d'illumination sur l'imageur contribue à réduire avantageusement le phénomène de rupture des couleurs ou « color break-up » en langue anglaise.

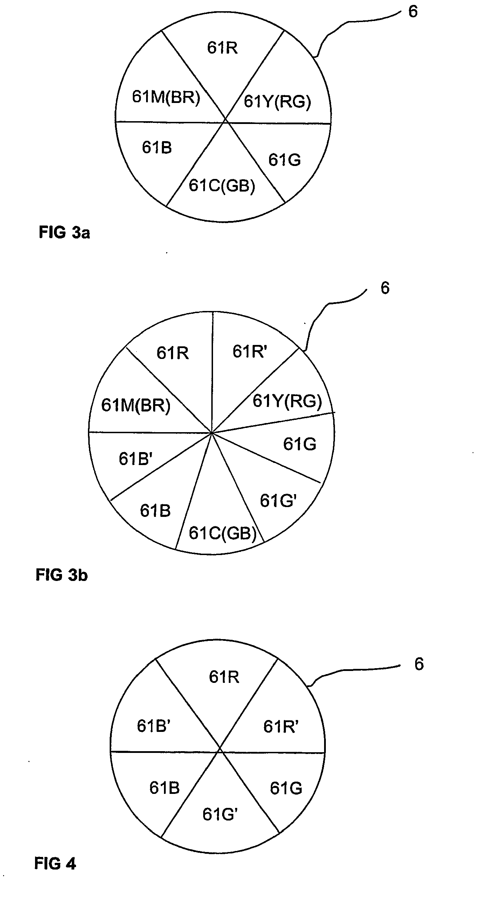

Le brevet US5863125 de IBM décrit une roue colorée comprenant deux sous-ensemble de segments colorés. Cependant, à la différence de notre invention, il s'agit d'un système d'illumination à séparation spatio-chromatique pour illuminer deux imageurs, et les segments sur la roue colorée ne sont pas coplanaires (figure 4).

Selon différents modes de réalisation, ledit domaine des longueurs d'ondes du faisceau de lumière polychromatique émis par la source comprend également le jaune et/ou le cyan. Il s'agit d'utiliser des sources de lumières courantes dans le domaine des projecteurs d'images (vidéo), dont les coûts tendent à baisser et la durée de vie à augmenter, sans se limiter à un type de source spécifique.

Selon une autre caractéristique de l'invention, dans l'au moins un sous-ensemble coplanaire de segments de couleurs composées, ledit segment transmettant au moins en partie à la fois dans les domaines des longueurs d'ondes du rouge et du vert transmet également au moins en partie dans le domaine des longueurs d'ondes du jaune et ledit segment transmettant au moins en partie à la fois dans les domaines des longueurs d'ondes du vert et du bleu transmet également au moins en partie dans le domaine des longueurs d'ondes du cyan et ledit segment transmettant au moins en partie à la fois dans les domaines des longueurs d'ondes du rouge et du bleu transmet également au moins en partie dans les domaines des longueurs d'ondes du magenta. L'emploi de filtres colorés transmettant également dans les domaines des longueurs d'ondes du cyan et du jaune et du magenta en ce qui concerne les segments de couleurs composées, permet la transmission desdits domaines de longueurs d'ondes lorsqu'ils sont émis par la source lumineuse. Ainsi la roue colorée selon l'invention, comprenant un sous-ensemble de segments de couleurs composées en plus du sous-ensemble de couleurs primaires, transmet un flux de photons qui, lorsqu'il est moyenné sur un tour de roue, est supérieur au flux de photons transmis par une roue colorée comprenant deux sous-ensembles classiques de couleurs primaires comme décrit dans l'art antérieur cité précédemment. Cela contribue ainsi avantageusement à une augmentation du flux lumineux de l'image, autrement dit de la luminosité. Selon une autre caractéristique de l'invention, les segments de chaque sous-ensembles coplanaires sont positionnés de telle de sorte que chaque segment de couleur composée est disposé entre les deux segments de couleurs primaires que ce segment de couleurs composées transmet. Cette position spécifique des segments de couleurs composées par rapport aux segments de couleurs primaires permet de réduire de façon significative le color beak-up. En effet, le brusque passage d'un segment de couleur primaire rouge par exemple à un segment de couleur primaire vert, comme décrit dans l'art antérieur cité précédemment, est avantageusement adouci par la présence entre ces deux segments de couleurs primaires du segment de couleurs composées transmettant au moins en partie à la fois dans les domaines des longueurs d'ondes du rouge et du vert et / ou du jaune.

Selon un mode de réalisation de l'invention, ladite roue colorée comprend au moins un sous-ensemble coplanaire de segments de couleurs désaturées comprenant un segment transmettant dans le domaine des longueurs d'ondes du rouge, désaturé par rapport au rouge du sous-ensemble coplanaire de segments de couleurs primaires, un segment transmettant dans le domaine des longueurs d'ondes du vert, désaturé par rapport au vert du sous-ensemble coplanaire de segments de couleurs primaires, et un segment transmettant dans le domaine des longueurs d'ondes du bleu, désaturé par rapport au bleu du sous-ensemble coplanaire de segments de couleurs primaires. Ainsi, étant donné que les segments de couleurs désaturées laissent passer un flux plus important de photons issus de la source de lumière que les segments de couleurs primaires non désaturées, la luminosité de l'image, moyennée sur un tour de roue, est améliorée. De plus, dans le mode de réalisation selon lequel chaque segment de couleur désaturée est adjacent au segment de couleur primaire de teinte équivalente, selon le sens de rotation de la roue colorée, les passages entre deux segments de couleurs primaires sont rendus moins brusques par la présence intermédiaire dudit segment de couleur désaturée, le phénomène de « color break-up » en langue anglaise est aussi réduit.

Selon une autre caractéristique, ladite roue colorée ne comprend pas de segment noir. Les imageurs de type à cristaux liquides, par exemple LCOS, ont une période de temps mort de l'ordre de quelques millisecondes pendant l'adressage électronique des données pour écriture des pixels d'une trame ainsi que pendant la stabilisation desdits pixels liée au temps de réponse des cristaux liquides. C'est pourquoi, comme l'imageur ne peut être illuminé pendant cette période, certaines roues colorées comprennent aussi des segments noirs pour stopper le faisceau lumineux. Comme la luminosité globale du système s'en trouve réduite, il est préférable de disposer d'une roue sans segment noir. Ceci est désormais possible avec l'emploi d'imageurs de type DMD qui ne présentent pratiquement pas de période de temps mort et aussi avec l'emploi des nouvelles générations d'imageurs LCOS disposant de mémoires ou transistors au niveau de chaque pixel ou groupe de pixels et ne présentant également pratiquement plus de période de temps mort. La diminution ou l'élimination totale du temps de présence d'éléments noirs ou sombresb sur l'écran, dus aux segments noirs sur la roue colorée, permet d'atténuer le phénomène perceptif de « color break-up » en langue anglaise entre chaque image chromatique affichée par le système d'illumination séquentiel.

Ceci présente notamment l'avantage d'augmenter le flux lumineux du système de visualisation d'images selon le rapport du temps de présence des segments noirs au temps de la trame.

Ainsi, la luminosité des images composées grâce à une roue colorée ne comprenant pas de segment(s) noir(s) est meilleure et le « color break-up » en langue anglaise, est moins perceptible.

Selon une caractéristique de l'invention, ledit dispositif d'illumination est compris dans un système de visualisation et/ou de projection d'images comprenant lui-même en outre :

- un imageur comprenant lui-même un réseau de pixels disposées en lignes et en colonnes,
- un objectif de projection adapté pour projeter l'image dudit imageur sur un écran de projection.

Le système de visualisation et/ou de projection d'images ainsi obtenu présente notamment un niveau élevé de luminosité et un phénomène de « color break-up » en langue anglaise, quasiment imperceptible par le spectateur.

Selon une autre caractéristique de l'invention, ledit système de visualisation et/ou de projection d'images comprenant le dispositif d'illumination selon l'invention comprend des moyens de gestion des données vidéo desdites images pour commander l'écriture des pixels de l'imageur, des moyens de synchronisation des données vidéo en fonction de la couleur d'illumination sur l'imageur, lesdits moyens de gestion des données vidéo comprenant une interface vidéo entrante pour recevoir les données vidéo entrantes de couleurs primaires, une interface vidéo sortante pour envoyer les données vidéo sortantes pour écriture vers l'imageur , et une mémoire. Les moyens de gestion des données vidéo comprennent en mémoire au moins une table de coefficients et/ou de valeurs pour transformer les données vidéo entrantes de couleurs primaires en données vidéo sortantes de couleurs primaires, de couleurs composées, et le cas échéant de couleurs désaturées.

Les moyens de gestion des données vidéo transforment ainsi les données vidéo des trois bus parallèles R, G, et B en un seul bus délivrant en série les données correspondant aux différents segments de la roue colorée.

Selon une caractéristique de l'invention, lesdites données vidéo sortantes de couleurs primaires et/ou composées et/ou désaturées provenant des moyens de gestion des données vidéo sont synchronisées avec la couleur d'illumination sur l'imageur. Ainsi le spectateur voit une image de couleur de meilleure qualité, sans effets de mélanges des couleurs.

L'invention concerne également un système d'illumination séquentielle d'un imageur comprenant :

- une source émettant en direction de l'imageur un faisceau de lumière polychromatique dans le domaine des longueurs d'ondes comprenant au moins le rouge, le vert, et le bleu,
- des moyens optiques pour répartir uniformément la lumière de la source sur la surface utile de l'imageur,
- une roue colorée comprenant au moins deux sous-ensembles coplanaires de segments réflectifs, positionnée de manière à ce que l'un au moins de ces segments coupe le faisceau, montée sur des moyens de rotation de manière à faire défiler séquentiellement les segments au niveau de la zone de coupure du faisceau, chaque sous-ensemble coplanaire de segments comprenant trois segments coplanaires de couleurs différentes, dont la teinte, la saturation, la réflectivité, et la taille sont adaptées pour composer un blanc de référence lorsqu'ils défilent séquentiellement au niveau de ladite zone de coupure, la roue colorée comprenant au moins un sous-ensemble de segments de couleurs primaires comprenant un segment réfléchissant dans le domaine des longueurs d'ondes du rouge, un segment réfléchissant dans le domaine des longueurs d'ondes du vert, et un segment réfléchissant dans le domaine des longueurs d'ondes du bleu.

La roue colorée est remarquable en ce qu'elle comprend au moins un sous-ensemble de segments coplanaires de couleurs composées comprenant un segment réfléchissant au moins en partie à la fois dans les domaines des longueurs d'ondes du rouge et du vert, un segment réfléchissant au moins en partie à la fois dans les domaines des longueurs d'ondes du vert et du bleu, et un segment réfléchissant au moins en partie à la fois dans les domaines des longueurs d'ondes du rouge et du bleu, aucunes des couleurs composées d'un même segment ne générant une teinte blanc.

En outre, l'invention concerne un appareil de projection comprenant au moins un imageur, un système d'illumination séquentielle de chacun des imageurs, tel que défini précédemment selon l'invention et des moyens de projection d'une image créée par ledit ou lesdits imageurs.

L'invention sera mieux comprise à la lecture de la description qui va suivre, donnée à titre d'exemple non limitatif, et en référence aux figures annexées sur lesquelles :

- La figure 1 représente schématiquement les éléments principaux d'un système de projection d'images à unique imageur ou « single valve » en langue anglaise ;
- La figure 2a présente une roue colorée comprenant trois segments colorés et un segment de teinte blanche, et la figure 2b présente une roue colorées comprenant six segments colorés RGB comme décrits dans l'art antérieur ;
- La figure 3a présente une roue colorée qui comprend, selon un mode préférentiel de l'invention, deux sous ensembles coplanaires de trois segments de couleurs différentes, un sous-ensemble de couleurs primaires et un sous-ensemble de couleurs composées ; La figure 3b comprend, selon un autre mode de réalisation de l'invention, un sous-ensemble de trois segments de couleurs primaires désaturées en plus des deux sous-segments de la roue colorée présentée sur la figure 3a ;
- La figure 4 présente une roue colorée comprenant notamment un sous-ensemble de segments de couleurs primaires et un sous-ensemble de couleurs primaires désaturées ;
- Les figures 5a et 5b représentent chacune un graphe qui présente respectivement :

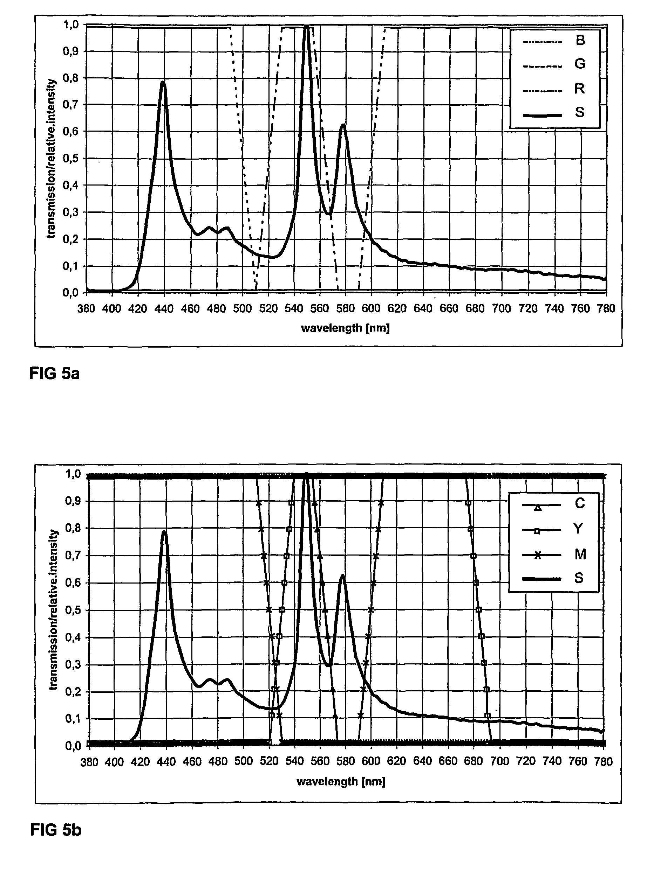

  pour la figure 5a, le spectre d'émission d'une source lumineuse courante et les domaines des longueurs d'ondes que transmettent les filtres de couleurs primaires R, G, B ;
  pour la figure 5b, le spectre d'émission de la même source lumineuse courante et les domaines des longueurs d'ondes que transmettent les filtres de couleurs composées Yellow (R+G), Magenta (B+R), Cyan (G+B) ;

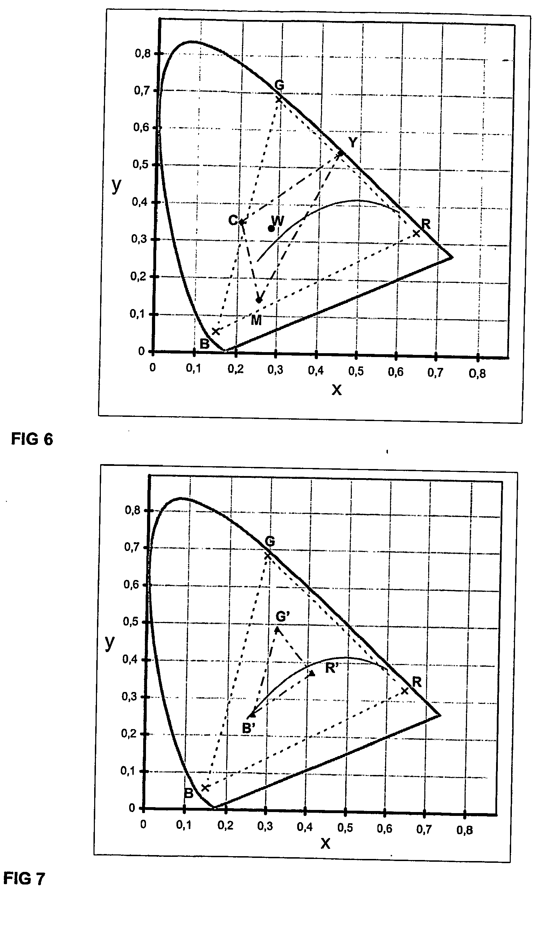

- La figure 6 présente le diagramme de chromaticité de la CIE 1931 (Commission Internationale de l'Eclairage) des couleurs transmises au travers d'une roue colorée comprenant un sous-ensemble de segments de couleurs composées selon un mode préférentiel de l'invention ;
- La figure 7 présente le diagramme de chromaticité de la CIE 1931 (Commission Internationale de l'Eclairage) des couleurs transmises au travers d'une roue colorée comprenant un sous-ensemble de segments de couleurs primaires désaturées selon un autre mode de réalisation de l'invention ;

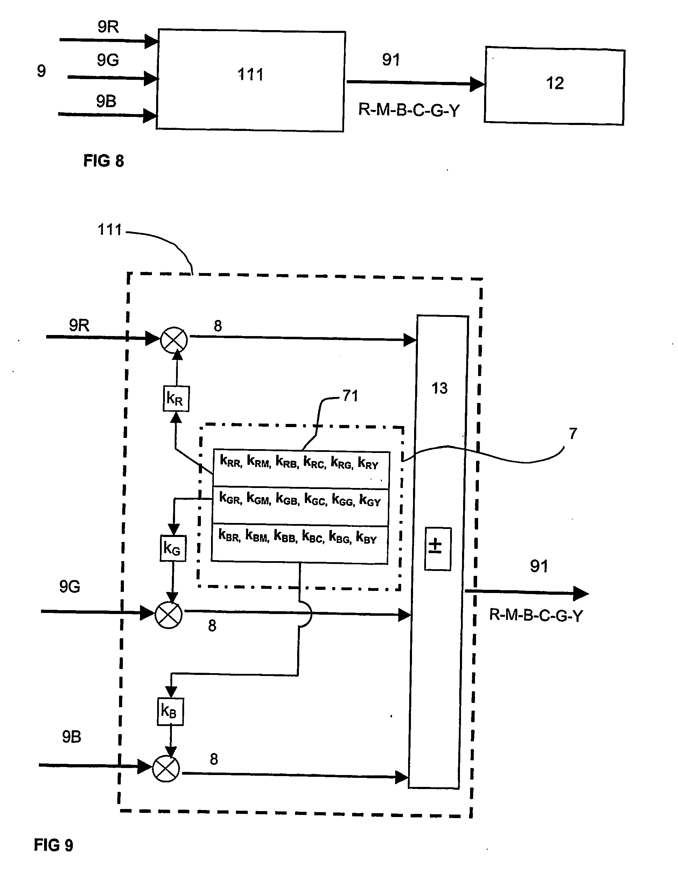

- Les figures 8 et 9 présentent les moyens de gestion des données vidéo selon un mode de réalisation préférentiel de l'invention.

Afin de simplifier la description et de faire apparaître les différences et avantages que présente l'invention par rapport à l'état antérieur de la technique, on utilise des références identiques pour les éléments qui assurent les mêmes fonctions.

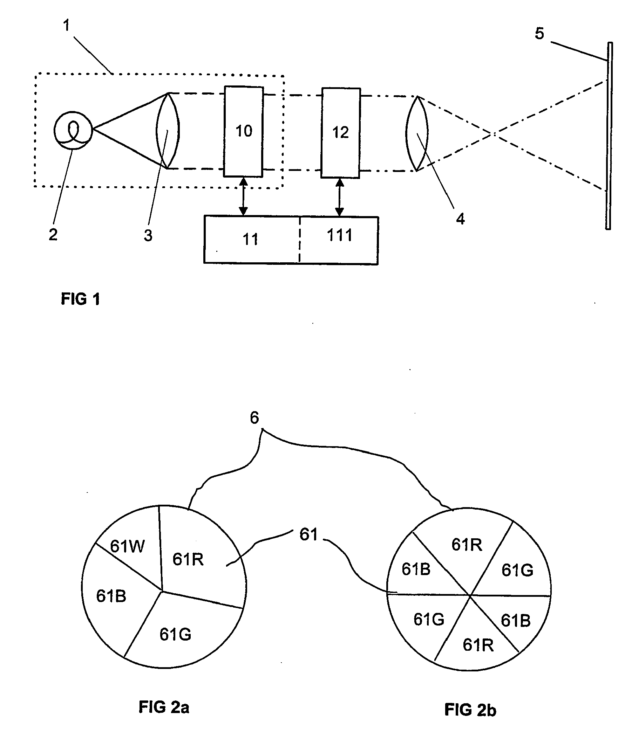

En référence à la figure 1, on décrit le principe général de fonctionnement d'un système de visualisation et/ou de projection d'images de type à un imageur.

Un système de projection à un imageur ou mono-imageur ou « single valve » en langue anglaise, est représenté schématiquement sur la figure 1. Le système comporte un sytème d'illumination 1 comprenant notamment une source de lumière 2 qui envoie la lumière sur un dispositif séparateur chromatique 10, par exemple chargé d'illuminer séquentiellement l'unique imageur 12 d'un faisceau de lumière colorée alternativement Rouge, Verte et Bleue RGB, ou bien de séparer la lumière provenant de la source 2 en bandes de lumière de couleurs différentes « color scrolling » en langue anglaise, au travers d'un dispositif optique intermédiaire 3 généralement de collimation. On ne décrira pas plus en détail les systèmes d'illumination de type à bandes colorées par la suite.

La lumière issue du système d'illumination 1 illumine un imageur 12 transmissif ou réflectif comprenant un réseau de pixels dont l'écriture est gérée par des moyens de gestion des données vidéo 111, associés notamment à des moyens de synchronisation 11 pour synchroniser la lumière issue du système d'illumination 1 avec les données vidéo provenant desdits moyens de gestion des données vidéo ou inversement pour synchroniser les données vidéo commandant l'écriture des pixels de l'imageur 12 pour moduler la lumière incidente, en fonction de la couleur d'illumination reçue. Après transmission, ou réflexion, au niveau de l'imageur 12, la lumière ainsi modulée est projetée sur un écran 5 via un objectif de projection 4. Les dispositifs 3 et 4, ainsi que la source de lumière 2 sont connus en eux-mêmes et ne seront pas plus décrits par la suite.

Le dispositif séparateur chromatique séquentiel 10 selon l'invention comprend une roue colorée 6. On entend par roue colorée un disque monté en son axe sur des moyens de rotation, comprenant des segments ou secteurs colorés 61 transmissifs, généralement des filtres de couleurs Rouge 61 R, Verte 61G et Bleue 61B, lesquels, lors de la rotation de la roue 6, coupent alternativement le faisceau de lumière polychromatique généralement de teinte blanche émis par la source lumineuse 2. Dans ce cas, le faisceau de lumière émis par la source lumineuse 2 est, après traversée ou réflexion sur la roue 6, selon que les segments colorés sont transmissifs ou réflectifs, alternativement un faisceau de lumière de couleur rouge R, un faisceau de lumière de couleur verte G, et un faisceau de lumière de couleur bleue B. En référence aux figures 2a et 2b, on décrit sur la figure 2a une roue colorée 6 à quatre segments, trois segments colorés 61 R, 61 G, 61 B, et un segment de teinte blanche 61W, connu de l'art antérieur. La figure 2b présente une roue colorée 6 à six segments colorés RGB également connu de l'art antérieur.

La figure 3a présente une roue colorée 6 61R-61Y(RG)-61G-61C(GB)-61B-61M(BR), selon un mode préférentiel de l'invention, comprenant deux sous-ensembles coplanaires de segments, un sous-ensemble de trois segments colorés transmissifs dans les domaines des longueurs d'ondes du rouge pour le segment rouge 61 R, des longueurs d'ondes du vert pour le segment vert 61G, et des longueurs d'ondes du bleu pour le segment bleu 61B, et un sous-ensemble de trois segments colorés transmissifs dans le domaine des longueurs d'ondes des couleurs composées, notamment le jaune et/ou le rouge et le vert pour le segment de couleurs composées 61Y(RG), le cyan et/ou le vert et le bleu pour le segment de couleurs composées 61C(GB), et le Magenta et/ou le bleu et le rouge pour le segment de couleurs composées 61 M(BR). Les flux lumineux du jaune, du magenta, et du cyan qui sont également transmis au travers des segments de couleurs composées 61Y(RG) pour le jaune, 61 C(GB) pour le cyan, et 61 M(BR) pour le magenta, contribuent à améliorer la luminosité sur l'imageur. Les segments de couleurs composées 61C(GB), 61M(BR), et 61Y(RG), sont positionnés préférentiellement de telle de manière que chacun desdits segments est disposé entre les deux segments de couleur primaires 61 R, 61 G, et 61 B, dont il transmet au moins en partie à la fois dans les domaines des longueurs d'ondes.

La figure 3b présente une roue colorée 6 selon une variante de l'invention, comprenant un sous-ensemble de segments de couleurs primaires 61 R, 61 G, 61 B, un sous-ensemble de segments de couleurs composées 61 Y(RG), 61 C(GB), 61 M(BR), et un sous-ensemble de segments de couleurs primaires désaturées 61 R' pour le segment rouge désaturé, 61 G' pour le segment vert désaturé et 61 B' pour le segment bleu désaturé.

La figure 4 présente une roue colorée 6 comprenant un sous-ensemble de segments de couleurs primaires 61 R, 61G, 61B, et un second sous-ensemble de segments de couleurs primaires désaturées 61 R', 61 G', et 61 B'

Les figures 5a et 5b présentent le profil du spectre d'émission S d'une source lumineuse 12 couramment utilisée dans les systèmes de projection et/ou de visualisation d'images actuels, de type UHP (Ultra Haute Pression) à Mercure par exemple, auquel on associe respectivement pour la figure 5a les profils des domaines des longueurs d'ondes qui sont transmis par les segments ou filtres de couleurs primaires R, G, et B, et pour la figure 5b les profils des domaines des longueurs d'ondes qui sont transmis par les segments ou filtres de couleurs composées Cyan C, Magenta M, et jaune Y. A titre d'exemple, les gammes des longueurs d'ondes pour une transmission ou intensité relative supérieure à 50% des filtres colorés utilisés sont :

- pour le filtre bleu B : inférieur à 500 nanomètres (nm),
- pour le filtre rouge R : supérieur à 600 nm,

- pour le filtre vert G : entre 520 et 564 nm,
- pour le filtre cyan C : inférieur à 564 nm,
- pour le filtre magenta M : inférieur à 520 et supérieur à 600 nm,
- pour le filtre jaune Y : entre 530 et 684 nm.

On observe que le spectre d'émission de la source S de type UHP choisie comprend notamment un premier pic d'émission proche de 440 nanomètres que les segments colorés de couleur bleue ou de couleur cyan ou de couleur magenta transmettent, un second pic d'émission proche de 550 nanomètres que les segments colorés de couleur verte ou de couleur cyan ou de couleur jaune transmettent, et un troisième pic d'émission proche de 580 nanomètres que les segments de couleur jaune transmettent. Comme cela a été décrit précédemment, la présence des segments ou filtres de couleurs composées permet de transmettre en plus des flux lumineux correspondant au couleurs primaires R, G, et B, les flux lumineux correspondant au cyan, au magenta, et au jaune, couleurs elles mêmes composées par exemple de bleu et de vert pour le cyan, de bleu et de rouge pour le magenta, et de vert et de rouge pour le jaune. Ainsi, une roue colorée par exemple comprenant un sous-ensemble de trois segments de couleurs primaires R, G, et B, et un sous-ensemble de trois segments de couleurs composées C(GB), M(BR), et Y(RG), chacun des segments représentant un sixième du disque, soit un segment de 60 degrés d'angle au niveau de l'axe du disque, sera comparable à neuf segments de 60 degrés d'angle également au niveau de l'axe, trois segments transmettant dans le domaine des longueurs d'ondes du bleu B, trois segments transmettant dans le domaine des longueurs d'ondes du vert G et trois segments transmettant dans le domaine des longueurs d'ondes du rouge R, en plus des segments de couleurs composées qui transmettent dans les domaines des longueurs d'ondes du cyan C ou du magenta M ou du jaune Y.

La figure 6 présente le diagramme de chromaticité de la CIE 1931 (Commission Internationale de l'Eclairage) des couleurs transmises d'une part au travers du sous-ensemble des trois segments de couleurs primaires R, G, et B (il s'agit du triangle RGB), et d'autre part au travers du sous-ensemble des trois segments de couleurs composées C, M, Y (il s'agit du triangle CMY). Chaque sous-ensemble de segments génère une teinte blanche spécifique. La teinte blanche générée par le sous-ensemble de couleurs composées C, M, Y peut, du fait du fort pic de couleur jaune émis par la source UHP et transmis par ledit sous-ensemble, être légèrement décalée vers le jaune. Cependant, il est possible de corriger la teinte de ce blanc conformément aux spécifications du système par un traitement logiciel en aval, ou bien en désaturant le filtre de couleur jaune 61Y(RG). A titre indicatif, la teinte blanche W générée par le sous-ensemble de segments de couleurs primaires et le sous-ensemble de segments de couleurs composées est visible sur le diagramme. L'alternance ordonnée de segments de couleurs primaires et de segments de couleurs composées 61 R-61Y(RGr61G-61C(GB)-61B-61M(BR) sur la roue colorée 6, selon un mode de réalisation préférentiel de l'invention et présentée à la figure 3 est basée sur la proximité des coordonnées, sur le diagramme de chromaticité CIE 1931, du Rouge et du Magenta, puis du Magenta et du Bleu, puis du Bleu et du Cyan, puis du Cyan et du Vert, puis du vert et du jaune, et enfin du jaune et du rouge. Le passage des couleurs selon cet ordre RMBCGY est moins brusque et réduit de ce fait le phénomène de rupture de couleur ou « color break-up » en langue anglaise.

La figure 7 présente le diagramme de chromaticité de la CIE 1931 des couleurs transmises d'une part au travers du sous-ensemble des trois segments de couleurs primaires R, G, et B (il s'agit du triangle RGB), et d'autre part au travers du sous-ensemble des trois segments de couleurs désaturées R', G', et B' (il s'agit du triangle R'G'B'). Généralement, on constate qu'une grande part des couleurs des images qui sont affichées, est comprise dans un gamut relativement réduit. Etant donné que les couleurs des images affichées ne sont pas toujours saturées, la présence de segments désaturés sur la roue colorée permet d'augmenter la luminosité de l'image affichée sans que leur qualité ne soit affectée.

La figure 8 met en évidence les moyens de gestion des données vidéo 11, lesquels reçoivent en entrée les signaux vidéo conventionnels 9 RGB et les transforment en signaux vidéo 91 R-M-B-C-G-Y par exemple selon le mode de réalisation préférentiel, afin que la synchronisation entre la roue colorée, ici la roue 6 61 R-61Y(RG)-61 G-61 C(GB)-61 B-61 M(BR) décrite sur la figure 3 qui permet d'illuminer alternativement l'imageur de lumière colorée R, Y(RG), G, C(GB), B, et M(BR), et l'écriture des pixels de l'imageur soit la plus précise possible.

La figure 9 décrit plus précisément les moyens de gestion des données vidéo 11, notamment la présence de table de coefficients 71 en mémoire 7 pour effectuer la transformation du signal d'entrée 9R, 9G, et 9B en signal de sortie 91 RGBCMY pour écriture sur l'imageur 12.

Le mode de réalisation préférentiel selon l'invention consiste en l'emploi d'une roue colorée 6 comprenant un sous-ensemble de trois segments de couleurs primaires rouge, verte, et bleue RGB (« Red, Green, Blue » en langue anglaise), et un second sous-ensemble de trois segments de couleurs composées cyan, magenta, et jaune CMY (« Cyan, Magenta, Yellow » en langue anglaise), tel que décrite sur la figure 3a, et où chaque segment occupe un sixième de la surface totale de la roue colorée. La surface de chaque segment peut cependant être différente et adaptée pour obtenir une balance des couleurs différente et/ou une luminosité supérieure sur l'écran. La source de lumière 2, par exemple de type UHP, émet un faisceau lumineux que la roue colorée 6, tournant sur son axe, coupe séquentiellement au niveau des segments colorés 61 R, 61 Y(RG), 61 G, 61 C(GB), 61 B, et 61 M(BR) qui la constituent. Le faisceau lumineux coloré issu du passage au travers d'un segment de la roue colorée 6 illumine un imageur 12 comprenant des pixels. Lesdits pixels de l'imageur peuvent être alignés, disposés en quinconce ou « diamond » en langue anglaise, de forme parallélépipédique ou autre, de type à cristaux liquides (LCOS par exemple) ou micro-mirrors (DMD par exemple).

L'imageur 12, illuminé séquentiellement d'un faisceau de lumière colorée rouge R, puis magenta M, puis bleue B, puis cyan C, puis verte G, et puis jaune Y est piloté par les moyens de gestions des données vidéo 111 chargés d'écrire chaque pixel ou groupe de pixels de l'imageur 12 en synchronisation avec la couleur d'illumination de l'imageur. Pour cela et en référence à la figure 8, les moyens de gestions des données vidéo 111 qui reçoivent les données vidéo de type RGB sous la forme de trois bus 9R, 9G, 9B de données R, G, et B effectuent un traitement du signal vidéo pour fournir, en sortie, pour écriture vers l'imageur 12, un seul bus 91 de données sortantes R-M-B-C-G-Y comprenant les signaux vidéo $S_R$, $S_G$, $S_B$, relatifs aux couleurs primaires R, G, et B et les signaux vidéo $S_C$, $S_M$, et $S_Y$, relatifs aux couleurs composées C, M, et Y, lesdits signaux étant synchronisés avec la couleur d'illumination de l'imageur 12 grâce, par exemple, à un dispositif de mesure (non représenté) de la position de la roue colorée 6. Les données vidéo R-M-B-C-G-Y de sortie 91 sont calculées à partir des données 9R, 9G, et 9B entrantes grâce à un ensemble de trois multiplicateurs 8, un pour chaque bus d'entrée 9, et un additionneur 13. Les signaux vidéo $S_R$, $S_G$, $S_B$ en sortie 91 correspondent aux signaux $S_R$, $S_G$, $S_B$ en entrée 9 ($K_{RR} = K_{GG} = K_{BB} = 1$) mais les signaux vidéo des couleurs composées C, M, et Y sont calculés à partir de coefficients $K_{RR}$, $K_{RM}$, $K_{RB}$, $K_{RC}$, $K_{RG}$, $K_{RY}$, $K_{GR}$, $K_{GM}$, $K_{GB}$, $K_{GC}$, $K_{GG}$, $K_{GY}$, $K_{BR}$, $K_{BM}$, $K_{BB}$, $K_{BC}$, $K_{BG}$, $K_{BY}$, contenus dans une table 71 au sein d'une mémoire 7.

On calcule par exemple les valeurs de $S_C$, $S_M$, et $S_Y$ à partir de $S_R$, $S_G$, et $S_B$ de la manière suivante :

$$S_C = K_{GC}*S_G + K_{BC}*S_B + K_{RC}*S_R$$

$$S_M = K_{GM}*S_G + K_{BM}*S_B + K_{RM}*S_R$$

$$S_Y = K_{GY}*S_G + K_{BY}*S_B + K_{RY}*S_R$$

Les valeurs des coefficients peuvent être par exemples les suivantes :

| Sortie Video (91) | Coefficient $k_R$ | Coefficient $k_G$ | Coefficient $k_B$ |
|---|---|---|---|
| Rouge | $K_{RR} = 1$ | $K_{GR} = 0$ | $K_{BR} = 0$ |
| Magenta | $K_{RM} = 0.1$ à $1$ | $K_{GM} = 0$ | $K_{BM} = 0.1$ à $1$ |
| Bleu | $K_{RB} = 0$ | $K_{GB} = 0$ | $K_{BB} = 1$ |
| Cyan | $K_{RC} = 0$ | $K_{GC} = 0.1$ à $1$ | $K_{BC} = 0.1$ à $1$ |
| Vert | $K_{RG} = 0$ | $K_{GG} = 1$ | $K_{BG} = 0$ |
| Jaune | $K_{RY} = 0.1$ à $1$ | $K_{GY} = 0.1$ à $1$ | $K_{BY} = 0$ |

La table 71 de coefficients $K_{RR}$, $K_{RM}$, $K_{RB}$, $K_{RC}$, $K_{RG}$, $K_{RY}$, $K_{GR}$, $K_{GM}$, $K_{GB}$, $K_{GC}$, $K_{GG}$, $K_{GY}$, $K_{BR}$, $K_{BM}$, $K_{BB}$, $K_{BC}$, $K_{BG}$, $K_{BY}$, est préférentiellement contenue dans une mémoire 7 de type non volatile EEPROM par exemple, et les coefficients sont lus séquentiellement en concordance avec la position de la roue colorée 6.

Un autre mode de réalisation consiste à employer une roue colorée telle que présentée en figure 3b. La roue 6 comprend trois sous-ensembles coplanaires de segments colorés 61 un sous-ensemble de segments de couleurs primaires RGB, un sous-ensemble de segments de couleurs composées CMY, et un sous-ensemble de segments de couleurs primaires désaturées 61 R' (pour le segment rouge désaturé), 61 G' (pour le segment vert désaturé), et 61 B' (pour le segment bleu désaturé). Lesdits segments 61 R', 61 G', et 61 B' de couleurs désaturées sont préférentiellement ordonnés de telle sorte qu'un segment de couleur primaire désaturée, respectivement 61 R', 61G', ou 61B', est adjacent au segment de couleur primaire non désaturé, respectivement 61 R, 61 G, ou 61 B, de teinte équivalente. Ceci permet donc d'alterner par exemple un segment de couleur primaire, un segment de couleur primaire désaturée, et un segment de couleur composée.

Un autre mode de réalisation présenté sur la figure 4, consiste en une roue colorée comprenant deux sous-ensembles de segments colorés : un sous-ensemble de couleurs primaires R, G, B, et un sous-ensemble de segments de couleurs primaires désaturées R', G', B'. Pour ce mode de réalisation, comme pour les modes de réalisation précédents, les niveaux de saturation ainsi que les dimensions des segments de couleurs peuvent être adapté(e)s pour obtenir la luminosité souhaitée sur l'écran. Les segments de couleurs désaturées sont préférentiellement ordonnés de telle sorte qu'un segment de couleur primaire désaturée est adjacent au segment de couleur primaire non désaturé de teinte équivalente.

Enfin et quels que soient les modes de réalisation, les moyens de gestion des données Vidéo 111 contiendront en mémoire 7 au moins une table 71 de coefficients $K'_{RR}$, $K'_{RM}$, $K'_{RB}$, $K'_{RC}$, $K'_{RG}$, $K'_{RY}$, $K'_{GR}$, $K'_{GM}$, $K'_{GB}$, $K'_{GC}$, $K'_{GG}$, $K'_{GY}$, $K'_{BR}$, $K'_{BM}$, $K'_{BB}$, $K'_{BC}$, $K'_{BG}$, $K'_{BY}$, coefficients dont les valeurs seront adaptées pour que les données vidéo 91 en sortie, pour écriture vers l'imageur 12, concordent bien avec la couleur d'illumination sur l'imageur 12.

Bien entendu, l'invention ne se limite pas aux modes de réalisation décrits précédemment.

En particulier, l'homme du métier pourra adapter la roue colorée et prévoir d'autres agencements des segments de roues colorées, notamment leur ordre et leur nombre.

Comme indiqué précédemment, les segments de couleurs composées permettent la transmission de deux couleurs (vert-bleu; vert-rouge ou bleu-rouge). Selon une variante de l'invention, les segments vert-bleu et vert-rouge transmettent également les couleurs de fréquences intermédiaires, respectivement le cyan et le jaune. Ainsi, la luminosité du faisceau filtré est améliorée et on optimise l'utilisation d'une source qui émet dans le domaine des longueur d'ondes appartenant à ces perceptions colorées.

Selon une variante de l'invention, les segments des roues sont purement réflectifs au lieu d'être utilisés en transmission. Ainsi, dans le système de projection illustré en regard de la figure 1, la source 2 et le dispositif optique intermédiaire 3 éclairent une roue colorée utilisées en réflexion. L'axe de la roue colorée est préférentiellement incliné par rapport à l'axe de l'imageur 12 de sorte que les éléments du système d'illumination ne gènent pas la propagation du faisceau coloré obtenu par réflection sur la roue colorée.

Selon cette variante de réalisation de l'invention, la roue colorée comprend deux sous-ensembles coplanaires de segments :

- un sous-ensemble de trois segments colorés réflectifs dans les domaines des longueurs d'ondes du rouge pour le segment rouge R, des longueurs d'ondes du vert pour le segment vert G, et des longueurs d'ondes du bleu pour le segment bleu B ; et

- un sous-ensemble de trois segments colorés réflectifs dans le domaine des longueurs d'ondes des couleurs composées, notamment le rouge et le vert et éventuellement le jaune pour le segment de couleurs composées Y(RG), le vert et le bleu, et éventuellement le cyan, pour le segment de couleurs composées C(GB), et le bleu et le rouge et éventuellement le magenta pour le segment de couleurs composées M(BR), aucunes desdites couleurs composées d'un même segment ne générant une teinte blanche.

Les flux lumineux du jaune, du magenta, et du cyan qui sont également réfléchis par des segments de couleurs composées Y(RG) pour le jaune, C(GB) pour le cyan, et M(BR) pour le magenta, contribuent à améliorer la luminosité sur l'imageur. Les segments de couleurs composées C(GB), M(BR), et Y(RG), sont positionnés préférentiellement de telle manière que chacun des segments est disposé entre les deux segments de couleur primaires R, G, et B, dont il réfléchit au moins en partie le domaine des longueurs d'ondes.

Selon un mode de réalisation particulier de cette variante, les segments de chaque sous-ensemble coplanaire sont positionnés de telle sorte que chaque segment de couleur composée est disposé entre les deux segments de couleurs primaires que ce segment de couleurs composées réfléchit. Ainsi, le color beak-up peut être significativement réduit.

Selon un autre mode de réalisation particulier de cette variante, la roue colorée comprend au moins un sous-ensemble coplanaire de segments réflectifs de couleurs désaturées comprenant un segment réfléchissant dans le domaine des longueurs d'ondes du rouge désaturé par rapport au rouge du sous-ensemble coplanaire de segments de couleurs primaires, un segment réfléchissant dans le domaine des longueurs d'ondes du vert, désaturé par rapport au vert du sous-ensemble coplanaire de segments de couleurs primaires, et un segment réfléchissant dans le domaine des longueurs d'ondes du bleu, désaturé par rapport au bleu du sous-ensemble coplanaire de segments de couleurs primaires. Ainsi, la luminosité de l'image, moyennée sur un tour de roue, est améliorée. De plus, dans un mode de réalisation selon lequel chaque segment de couleur désaturée est adjacent au segment de couleur primaire de teinte équivalente, selon le sens de rotation de la roue colorée, le phénomène de « color break-up » est aussi réduit.

Selon encore un autre mode de réalisation particulier de cette variante (roue colorée avec segment réflectif), la roue colorée ne comprend pas de segment noir. Ainsi, la luminosité est améliorée et la perception du color breakup est réduite.

La roue colorée comprenant, selon une variante de l'invention, des segments utilisés en réflexion est ainsi utilisée de manière duale par rapport à une roue colorée comprenant des segments transmissifs conformément aux modes de réalisation précédemment décrits. Les mêmes variantes s'appliquent donc au segments réflectifs et les avantages sont les mêmes. Elles ne seront donc pas décrites davantage.

D'une manière générale, les segments transmissifs ou réflectifs adaptés respectivement à transmettre ou à réfléchir un flux lumineux vers un imageur peuvent être assimilés à des segments de filtrage optiques adaptés à propager un flux lumineux vers un imageur.

L'invention concerne également un appareil de projection frontale ou de rétroprojection comprenant au moins un imageur, un tel système d'illumination séquentielle de chaque imageur avec segments transmissifs ou réflectifs et des moyens de projection d'une image créée par le ou les imageurs, par exemple un objectif, un ou plusieurs miroirs de repli (pour un appareil de rétroprojection compact ou non) et un écran (dans le cas d'un appareil de rétroprojection).

Ainsi, l'appareil de projection comprend, selon l'invention, par exemple, un imageur ou deux imageurs (chacun des imageurs étant éclairé par un faisceau propagé par une roue colorée à au moins six segments dont trois de couleurs primaires et trois de couleurs composées ; dans ce cas, une même roue colorée peut être utilisée pour les deux imageurs (par exemple dans une confirguration où une même roue colorée est utilisée soit en réflexion soit en transmission pour les deux imageurs ou encore selon une configuration où une même roue colorée est utilisée en réflexion pour un imageur et en transmission pour l'autre imageur) ou, au contraire, deux roues distinctes sont mises en oeuvre).

## Revendications

1. Système d'illumination (1) séquentielle d'un imageur (12) comprenant

   - une source (2) émettant en direction de l'imageur (12) un faisceau de lumière polychromatique dans le domaine des longueurs d'ondes comprenant au moins le rouge, le vert, et le bleu,
   - des moyens (3) optiques pour répartir uniformément la lumière de la source sur la surface utile de l'imageur (12),
   - une roue colorée (6) comprenant au moins deux sous-ensembles coplanaires de segments (61) transmissifs, positionnée de manière à ce que l'un au moins de ces segments (B1) coupe ledit faisceau, montée sur des moyens de rotation de manière à faire défiler séquentiellement lesdits segments (61) au niveau de la zone de coupure dudit faisceau, chaque sous-ensemble coplanaire de segments (61) comprenant trois segments coplanaires de couleurs différentes, dont la teinte, la saturation, la transmissivité, et la taille sont adaptées pour composer un blanc de référence lorsqu'ils défilent séquentiellement au niveau de ladite zone de coupure, la roue colorée (6) comprenant au moins un sous-ensemble de segments de couleurs primaires comprenant un segment (61 R) transmettant dans le domaine des longueurs d'ondes du rouge, un segment transmettant dans le domaine des longueurs d'ondes du vert (61G), et un segment transmettant dans le domaine des longueurs d'ondes du bleu (61B),
   **caractérisé en ce que** ladite roue colorée (6) comprend au moins un sous-ensemble de segments coplanaires de couleurs composées comprenant :

      - un segment (61Y(RG)) jaune et transmettant au moins en partie à la fois dans les domaines des longueurs d'ondes du rouge et du vert,
      - un segment (61 C(GB)) cyan et transmettant au moins en partie à la fois dans les domaines des longueurs d'ondes du vert et du bleu, et
      - un segment (61 M(BR)) magenta et transmettant au moins en partie à la fois dans les domaines des longueurs d'ondes du rouge et du bleu,

   aucunes desdites couleurs composées d'un même segment ne générant une teinte blanc,
   la longueur d'onde du rouge étant supérieure à 600 nanomètres ;
   la longueur d'onde du bleue étant inférieure à 500 nanomètres ; et
   la longueur d'onde du vert étant comprise entre 520 et 564 nanomètres.

2. Système d'illumination (1) séquentielle d'un imageur (12) selon la revendication précédente **caractérisé en ce que** ledit domaine des longueurs d'ondes du faisceau de lumière polychromatique émis par la source (2) comprend également le jaune et/ou le cyan :

3. Système d'illumination (1) séquentielle d'un imageur (12) selon la revendication 2 **caractérisé en ce que**, dans l'au moins un sous-ensemble coplanaire de segments (61) de couleurs composées, ledit segment (61Y(RG)) transmettant au moins en partie à la fois dans le domaine des longueurs d'ondes du rouge et du vert transmet également au moins en partie dans le domaine des longueurs d'ondes égalisant les tonalités du jaune, et/ou ledit segment (61C(GB)) transmettant au moins en partie à la fois dans les domaines des longueurs d'ondes du vert et du bleu transmet également au moins en partie dans le domaine des longueurs d'ondes égalisant les tonalités du cyan, et/ou ledit segment (61M(BR)) transmettant au moins en partie à la fois dans les domaines des longueurs d'ondes du rouge et du bleu transmet également au moins en partie dans les domaines des longueurs d'ondes égalisant les tonalités du magenta ;

**4.** Système d'illumination (1) séquentielle d'un imageur (12) selon les revendications 1 ou 3 **caractérisé en ce que** les segments (61) de chaque sous-ensembles coplanaires sont positionnés de telle de sorte que chaque segment de couleur composée est disposé entre les deux segments de couleur primaires que ce segment de couleurs composées transmet ;

**5.** Système d'illumination (1) séquentielle d'un imageur (12) selon la revendication 1 **caractérisé en ce que** ladite roue colorée (6) comprend au moins un sous-ensemble coplanaire de segments (61) de couleurs désaturées comprenant un segment transmettant dans le domaine des longueurs d'ondes du rouge (61R') désaturé par rapport au rouge du segment rouge (61 R) du sous-ensemble coplanaire de segments de couleurs primaires, un segment transmettant dans le domaine des longueurs d'ondes du vert (61G'), désaturé par rapport au vert du segment vert (61G) du sous-ensemble coplanaire de segments de couleurs primaires, et un segment transmettant dans le domaine des longueurs d'ondes du bleu (61 B'), désaturé par rapport au bleu du segment bleu (61 B) du sous-ensemble coplanaire de segments de couleurs primaires ;

**6.** Système d'illumination (1) séquentielle d'un imageur (12) selon la revendication précédente **caractérisé en ce que** les segments de couleurs désaturées (61) sont positionnés de telle de sorte que chaque segment de couleur désaturée est adjacent au segment de couleur primaire de teinte équivalente ;

**7.** Système d'illumination (1) séquentielle d'un imageur (12) selon l'une quelconque des revendications précédentes **caractérisé en ce que** ladite roue colorée (6) ne comprend pas de segment noir ;

**8.** Système de visualisation d'images comprenant un système d'illumination (1) selon l'une quelconque des revendications précédentes, un imageur (12) éclairé par ledit système d'illumination (1) et comprenant un réseau de pixels disposés en lignes et en colonnes, et un objectif de projection (4) adapté pour projeter l'image dudit imageur sur un écran de projection (5),

**9.** Système de visualisation d'images selon la revendication 8 comprenant :

- des moyens de gestion des données vidéo (111) desdites images pour commander l'écriture des pixels de l'imageur (12), lesdits moyens de gestion des données vidéo (111) comprenant une interface vidéo entrante pour recevoir les données vidéo entrantes (9) de couleurs primaires, une interface vidéo sortante (91) pour envoyer les données vidéo sortantes pour écriture vers l'imageur (12), et une mémoire (7),
- des moyens de synchronisation (11) des données vidéo sortantes (91) en fonction de la couleur d'illumination sur l'imageur (12),

**caractérisé en ce que** les moyens de gestion des données vidéo (111) comprennent en mémoire (7) au moins une table (71) de coefficients et/ou de valeurs pour transformer les données vidéo entrantes (9) de couleurs primaires en données vidéo sortantes (91) de couleurs primaires et/ou composées et/ou désaturées ;

**10.** Système d'illumination (1) séquentielle d'un imageur (12) comprenant :

- une source (2) émettant en direction de l'imageur (12) un faisceau de lumière polychromatique dans le domaine des longueurs d'ondes comprenant au moins le rouge, le vert, et le bleu,
- des moyens (3) optiques pour répartir uniformément la lumière de la source sur la surface utile de l'imageur (12), et
- une roue colorée (6) comprenant au moins deux sous-ensembles coplanaires de segments (61) réflectifs, positionnée de manière à ce que l'un au moins de ces segments (61) coupe ledit faisceau, montée sur des moyens de rotation de manière à faire défiler séquentiellement lesdits segments (61) au niveau de la zone de coupure dudit faisceau, chaque sous-ensemble coplanaire de segments (61) comprenant trois segments coplanaires de couleurs différentes, dont la teinte, la saturation, la réflectivité, et la taille sont adaptées pour composer un blanc de référence lorsqu'ils défilent séquentiellement au niveau de ladite zone de coupure, la roue colorée (6) comprenant au moins un sous-ensemble de segments de couleurs primaires comprenant un segment (61R) réfléchissant dans le domaine des longueurs d'ondes du rouge, un segment réfléchissant dans le domaine des longueurs d'ondes du vert (61G), et un segment réfléchissant dans le domaine des longueurs d'ondes du bleu (61 B),

**caractérisé en ce que** ladite roue colorée (6) comprend au moins un sous-ensemble de segments coplanaires de couleurs composées comprenant :

- un segment (61Y(RG)) jaune et réfléchissant au moins en partie à la fois dans les domaines des longueurs d'ondes du rouge et du vert,
- un segment (61C(GB)) cyan et réfléchissant au moins en partie à la fois dans les domaines des longueurs d'ondes du vert et du bleu, et
- un segment (61 M(BR)) magenta et réfléchissant au moins en partie à la fois dans les domaines des longueurs d'ondes du rouge et du bleu,

aucunes desdites couleurs composées d'un même segment ne générant une teinte blanc ;
la longueur d'onde du rouge étant supérieure à 600 nanomètres ;
la longueur d'onde du bleue étant inférieure à 500 nanomètres ; et
la longueur d'onde du vert étant comprise entre 520 et 564 nanomètres.

11. Appareil de projection **caractérisé en ce qu'**il comprend au moins un imageur, un système d'illumination (1) séquentielle de chacun desdits imageurs selon l'une quelconque des revendications 1 à 10, et des moyens de projection d'une image créée par ledit ou lesdits imageurs.

**Claims**

1. A system (1) for the sequential illumination of an imager (12) comprising

- a source (2) emitting, toward the imager (12), a beam of polychromatic light in the range of wavelengths containing at least red, green and blue,
- optical means (3) for uniformly distributing the light from the source over the working area of the imager (12),
- a color wheel (6) comprising at least two coplanar subsets of transmissive segments (61), and positioned in such a way that at least one of these segments (61) intersects said beam, mounted on rotation means in such a way as to cause said segments (61) to file in sequence past said beam intersection region, each coplanar subset of segments (61) comprising three coplanar segments of different colors, the tint, saturation, transmissivity and size of which are tailored to make up a reference white when they file in sequence past said intersection region, the color wheel (6) comprising at least one subset of segments of primary colors comprising a segment (61 R) transmitting in the range of wavelengths corresponding to red, a segment transmitting in the range of wavelengths corresponding to green (61G), and a segment transmitting in the range of wavelengths corresponding to blue (61 B),

**characterized in that** said color wheel (6) comprises at least one subset of coplanar segments of composite colors comprising a segment (61Y(RG)) transmitting at least in part both in the ranges of wavelengths corresponding to red and to green, a segment (61C(GB)) transmitting at least in part both in the ranges of wavelengths corresponding to green and to blue, and a segment (61M(BR)) transmitting at least in part both in the ranges of wavelengths corresponding to red and to blue, none of said composite colors of one and the same segment generating a white tint,
wavelengths corresponding to red being superior to 600 nm,
wavelengths corresponding to blue being inferior to 500 nm, and
wavelengths corresponding to green being comprised between 520 and 564 nm.

2. The system (1) for the sequential illumination of an imager (12) as claimed in the preceding claim, **characterized in that** said range of wavelengths of the beam of polychromatic light emitted by the source (2) also comprises yellow and/or cyan.

3. The system (1) for the sequential illumination of an imager (12) as claimed in claim 2, **characterized in that**, in the at least one coplanar subset of segments (61) of composite colors, said segment (61Y(RG)) transmitting at least in part both in the ranges of wavelengths corresponding to red and to green also transmits at least in part in the range of wavelengths equivalent to tones of yellow, and/or said segment (61C(GB)) transmitting at least in part both in the ranges of wavelengths corresponding to green and to blue also transmits at least in part in the range of wavelengths equivalent to tones of cyan, and/or said segment (61 M(BR)) transmitting at least in part both in the ranges of wavelengths corresponding to red and to blue also transmits at least in part in the ranges of wavelengths equivalent to tones of magenta.

**4.** The system (1) for the sequential illumination of an imager (12) as claimed in claims 1 or 3, **characterized in that** the segments (61) of each coplanar subset are positioned in such a way that each segment of composite color is positioned between the two segments of primary color that this composite color segment transmits.

**5.** The system (1) for the sequential illumination of an imager (12) as claimed in claim 1, **characterized in that** said color wheel (6) comprises at least one coplanar subset of segments (61) of desaturated colors comprising a segment transmitted in the range of wavelengths corresponding to red (61 R') desaturated with respect to the red of the red segment (61 R) of the coplanar subset of segments of primary colors, a segment transmitting in the range of wavelengths corresponding to green (61 G'), desaturated with respect to the green of the green segment (61G) of the coplanar subset of segments of primary colors, and a segment transmitting in the range of wavelengths corresponding to blue (61 B'), desaturated with respect to the blue of the blue segment (61 B) of the coplanar subset of segments of primary colors.

**6.** The system (1) for the sequential illumination of an imager (12) as claimed in the preceding claim, **characterized in that** the segments of desaturated colors (61) are positioned in such a way that each segment of desaturated color is adjacent to the primary-color segment of equivalent tint.

**7.** The system (1) for the sequential illumination of an imager (12) as claimed in any one of the preceding claims, **characterized in that** said color wheel (6) comprises no black segment.

**8.** A system for viewing images comprising an illumination system (1) as claimed in any one of the preceding claims, an imager (12) illuminated by said illumination system (1) and comprising an array of pixels arranged in rows and columns, and a projection lens (4) designed to project the image of said imager onto a projection screen (5).

**9.** The system for viewing images as claimed in claim 8, comprising:

video data management means (111) for managing the video data of said images so as to command writing of the pixels of the imager (12), said video data mangement means (111) comprising a video input interface for receiving the video input data (9) regarding the primary colors, a video output interface (91) for sending the video output data for writing to the imager (12), and a memory (7),
synchronizing means (11) for synchronizing the video output data (91) according to the color of illumination on the imager (12),
**characterized in that** the video data management means (111) comprise, in memory (7), at least one table (71) of coefficients and/or values for converting the video input data (9) regarding primary colors into video output data (91) regarding primary colors and/or composite colors and/or desaturated colors.

**10.** A system (1) for the sequential illumination of an imager (12) comprising:

- a source (2) emitting, toward the imager (12), a beam of polychromatic light in the range of wavelengths containing at least red, green and blue,
- optical means (3) for uniformly distributing the light from the source over the working area of the imager (12), and
- a color wheel (6) comprising at least two coplanar subsets of reflective segments (61), and positioned in such a way that at least one of these segments (61) intersects said beam, mounted on rotation means in such a way as to cause said segments (61) to file in sequence past said beam intersection region, each coplanar subset of segments (61) comprising three coplanar segments of different colors, the tint, saturation, reflectivity and size of which are tailored to make up a reference white when they file in sequence past said intersection region, the color wheel (6) comprising at least one subset of segments of primary colors comprising a segment (61 R) reflecting in the range of wavelengths corresponding to red, a segment reflecting in the range of wavelengths corresponding to green (61G), and a segment reflecting in the range of wavelengths corresponding to blue (61 B),

**characterized in that** said color wheel (6) comprises at least one subset of coplanar segments of composite colors comprising a segment (61Y(RG)) reflecting at least in part both in the ranges of wavelengths corresponding to red and to green, a segment (61C(GB)) reflecting at least in part both in the ranges of wavelengths corresponding to green and to blue, and a segment (61M(BR)) reflecting at least in part both in the ranges of wavelengths corresponding to red and to blue, none of said composite colors of one and the same segment generating a white tint,
wavelengths corresponding to red being superior to 600 nm,
wavelengths corresponding to blue being inferior to 500 nm, and
wavelengths corresponding to green being comprised between 520 and 564 nm.

11. A projection appliance, **characterized in that** it comprises at least one imager, a system (1) for the sequential illumination of each of said imagers as claimed in any one of claims 1 to 10, and means for projecting an image created by said imager or imagers.

**Patentansprüche**

1. System (1) zur sequenziellen Beleuchtung eines Bildgebers (12) mit:

   - einer Quelle (2), die in Richtung des Bildgebers (12) einen polychromatischen Lichtstrahl in dem Wellenlängenbereich von mindestens Rot, Grün und Blau aussendet,
   - optischen Mitteln (3), um das Licht der Quelle gleichmäßig auf der Nutzfläche des Bildgebers (12) zu verteilen,
   - einem Farbrad (6) mit mindestens zwei koplanaren Teilmengen vorn transmissiven Segmenten (61), das derart positioniert ist, dass mindestens eines dieser Segmente (61) den Lichtstrahl schneidet und das auf Drehmitteln derart montiert ist, dass die Segmente (61) sequenziell an dem Schnittbereich des Strahls vorbeilaufen, wobei jede koplanare Teilmenge von Segmenten (61) drei koplanare Segmente in unterschiedlichen Farben umfasst, deren Farbton, Sättigung, Transmissivität und Größe geeignet sind, ein Referenzweiß zu bilden, wenn sie sequenziell an dem Schnittbereich vorbeilaufen, wobei das Farbrad (6) mindestens eine Teilmenge von Segmenten in Primärfarben umfasst, die ein in dem Wellenlängenbereich von Rot transmittierendes Segment (61R), ein in dem Wellenlängenbereich von Grün transmittierendes Segment (61G) und ein in dem Wellenlängenbereich von Blau transmittierendes Segment (61B) umfassen,

   **dadurch gekennzeichnet, dass** das Farbrad (6) mindestens eine Teilmenge von koplanaren Segmenten in zusammengesetzten Farben umfasst, mit:

   - einem gelben Segment (61Y(RG)), das mindestens teilweise gleichzeitig in den Wellenlängenbereichen von Rot und Grün transmittiert,
   - einem cyanfarbenen Segment (61C(GB)), das mindestens teilweise gleichzeitig in den Wellenlängenbereichen von Grün und Blau transmittiert, und
   - einem magentafarbenen Segment (61M(BR)), das mindestens teilweise gleichzeitig in den Wellenlängenbereichen von Rot und Blau transmittiert, wobei

   keine der zusammengesetzten Farben ein und desselben Segments einen weißen Farbton erzeugt,
   die Wellenlänge von Rot größer als 600 Nanometer ist,
   die Wellenlänge von Blau kleiner als 500 Nanometer ist und
   die Wellenlänge von Grün zwischen 520 und 564 Nanometer liegt.

2. System (1) zur sequenziellen Beleuchtung eines Bildgebers (12) nach dem vorhergehenden Anspruch, **dadurch gekennzeichnet**, der Wellenlängenbereich des von der Quelle (2) ausgesendeten polychromatischen Lichtstrahls ebenfalls Gelb und/oder Cyan umfasst.

3. System (1) zur sequenziellen Beleuchtung eines Bildgebers (12) nach Anspruch 2, **dadurch gekennzeichnet, dass** in der mindestens einen koplanaren Teilmenge von Segmenten (61) in zusammengesetzten Farben das mindestens teilweise gleichzeitig in dem Wellenlängenbereich von Rot und Grün transmittierende Segment (61Y (RG)) mindestens teilweise auch in dem die Gelbtönungen egalisierenden Wellenlängenbereich und/oder das mindestens teilweise gleichzeitig in den Wellenlängenbereichen von Grün und Blau transmittierende Segment (61C (GB)) mindestens teilweise auch in dem die Cyantönungen egalisierenden Wellenlängenbereich und/oder das mindestens teilweise gleichzeitig in den Wellenlängenbereichen von Rot und Blau transmittierende Segment (61M(BR)) mindestens teilweise auch in den die Magentatönungen egalisierenden Wellenlängenbereichen transmittieren.

4. System (1) zur sequenziellen Beleuchtung eines Bildgebers (12) nach den Ansprüchen 1 oder 3, **dadurch gekennzeichnet, dass** die Segmente (61) jeder koplanaren Teilmenge derart positioniert sind, dass jedes Segment in zusammengesetzter Farbe zwischen den zwei Segmenten in den Primärfarben, die dieses Segment in zusammengesetzten Farben transmittiert, angeordnet ist.

5. System (1) zur sequenziellen Beleuchtung eines Bildgebers (12) nach Anspruch 1, **dadurch gekennzeichnet, dass** das Farbrad (6) mindestens eine koplanare Teilmenge von Segmenten (61) in ungesättigten Farben umfasst, die ein Segment, das in dem Wellenlängenbereich des Rots (61R') transmittiert, das in Bezug auf das Rot des roten Segments (61 R) der koplanaren Teilmenge von Segmenten in Primärfarben ungesättigt ist, ein Segment, das in dem Wellenlängenbereich des Grüns (61G') transmittiert, das in Bezug auf das Grün des grünen Segments (61G) der koplanaren Teilmenge von Segmenten in Primärfarben ungesättigt ist, und ein Segment, das in dem Wellenlängenbereich des Blaus (61B') transmittiert, das in Bezug auf das Blau des blauen Segments (61B) der koplanaren Teilmenge von Segmenten in Primärfarben ungesättigt ist, umfassen.

6.  System (1) zur sequenziellen Beleuchtung eines Bildgebers (12) nach dem vorhergehenden Anspruch, **dadurch gekennzeichnet, dass** die Segmente in ungesättigten Farben (61) derart positioniert sind, dass jedes Segment in ungesättigter Farbe an dem Segment in Primärfarbe mit gleichwertigem Farbton anliegt.

7.  System (1) zur sequenziellen Beleuchtung eines Bildgebers (12) nach einem beliebigen der vorhergehenden Ansprüche, **dadurch gekennzeichnet, dass** das Farbrad (6) kein schwarzes Segment aufweist.

8.  Bildanzeigesystem mit einem Beleuchtungssystem (1) nach einem beliebigen der vorhergehenden Ansprüche, einem Bildgeber (12), der durch das Beleuchtungssystem (1) beleuchtet wird und ein Gitter aus zeilen- und spaltenweise angeordneten Pixeln aufweist, und einem Projektionsobjektiv (4), das geeignet ist, das Bild des Bildgebers auf einen Projektionsbildschirm (5) zu projizieren.

9.  Bildanzeigesystem nach Anspruch 8 mit:

    - Mitteln für die Verwaltung der Videodaten (111} der Bilder, um das Schreiben der Pixel des Bildgebers (12) zu steuern, wobei die Mittel für die Verwaltung der Videodaten (111) eine Videoeingangsschnittstelle zum Empfangen der eingehenden Videodaten (9) in Primärfarben, eine Videoausgangsschnittstelle (91) zum Senden der zu schreibenden ausgehenden Videodaten an den Bildgeber (12) und einen Speicher (7) umfassen,
    - Mitteln (11), um die ausgehenden Videodaten (91) in Abhängigkeit von der Beleuchtungsfarbe an dem Bildgeber (12) zu synchronisieren,

    **dadurch gekennzeichnet, dass** die Mittel für die Verwaltung der Videodaten (111) in dem Speicher (7) mindestens eine Tabelle (71) mit Koeffizienten und/oder Werten enthalten, um die eingehenden Videodaten (9) in Primärfarben in ausgehende Videodaten (91) in Primärfarben und/oder zusammengesetzten Farben und/oder ungesättigten Farben umzuwandeln.

10. System (1) zur sequenziellen Beleuchtung eines Bildgebers (12) mit:

    - einer Quelle (2), die in Richtung des Bildgebers (12) einen polychromatischen Lichtstrahl in dem Wellenlängenbereich von mindestens Rot, Grün und Blau aussendet,
    - optischen Mitteln (3), um das Licht der Quelle gleichmäßig auf der Nutzfläche des Bildgebers (12) zu verteilen, und
    - einem Farbrad (6) mit mindestens zwei koplanaren Teilmengen von reflexiven Segmenten (61), das derart positioniert ist, dass mindestens eines dieser Segmente (61) den Strahl schneidet und das auf Drehmitteln derart montiert ist, dass die Segmente (61) sequenziell an dem Schnittbereich des Strahls vorbeilaufen, wobei jede koplanare Teilmenge von Segmenten (61) drei koplanare Segmente in unterschiedlichen Farben umfasst, deren Farbton, Sättigung, Reflexivität und Größe geeignet sind, ein Referenzweiß zu bilden, wenn sie sequenziell an dem Schnittbereich vorbeilaufen, wobei das Farbrad (6) mindestens eine Teilmenge von Segmenten in Primärfarben umfasst, die ein in dem Wellenlängenbereich von Rot reflektierendes Segment (61R), ein in dem Wellenlängenbereich von Grün reflektierendes Segment (61G) und ein in dem Wellenlängenbereich von Blau reflektierendes Segment (61B) umfassen,

    **dadurch gekennzeichnet, dass** das Farbrad (6) mindestens eine Teilmenge von koplanaren Segmenten in zusammengesetzten Farben umfasst, mit:

    - einem gelben Segment (61Y(RG)), das mindestens teilweise gleichzeitig in den Wellenlängenbereichen von Rot und Grün reflektiert,
    - einem cyanfarbenen Segment (61C(GB)), das mindestens teilweise gleichzeitig in den Wellenlängenbereichen von Grün und Blau reflektiert, und
    - einem magentafarbenen Segment (61M(BR)), das mindestens teilweise gleichzeitig in den Wellenlängenbereichen von Rot und Blau reflektiert, wobei

keine der zusammengesetzten Farben ein und desselben Segments einen weißen Farbton erzeugt, die Wellenlänge von Rot größer als 600 Nanometer ist, die Wellenlänge von Blau kleiner als 500 Nanometer ist und die Wellenlänge von Grün zwischen 520 und 564 Nanometer liegt.

11. Projektionsgerät, **dadurch gekennzeichnet, dass** es mindestens einen Bildgeber, ein System (1) zur sequenziellen Beleuchtung der jeweiligen Bildgeber nach einem beliebigen der Ansprüche 1 bis 10 und Mittel zum Projizieren eines von dem bzw. von den Bildgebern erzeugten Bilds umfasst.

**FIG 1**

**FIG 2a**

**FIG 2b**

6

61R

61M(BR)    61Y(RG)

61B    61G

61C(GB)

**FIG 3a**

6

61R    61R'

61M(BR)    61Y(RG)

61B'    61G

61B    61G'

61C(GB)

**FIG 3b**

6

61R

61B'    61R'

61B    61G

61G'

**FIG 4**

**FIG 5a**

**FIG 5b**

**FIG 6**

**FIG 7**

**FIG 8**

9 → 9R, 9G, 9B → 111 → 91 R-M-B-C-G-Y → 12

**FIG 9**

111

9R → ⊗ 8 → 13

$k_R$

71

$k_{RR}, k_{RM}, k_{RB}, k_{RC}, k_{RG}, k_{RY}$

$k_{GR}, k_{GM}, k_{GB}, k_{GC}, k_{GG}, k_{GY}$

$k_{BR}, k_{BM}, k_{BB}, k_{BC}, k_{BG}, k_{BY}$

$k_G$

9G → ⊗ 8 →

$\pm$

91 R-M-B-C-G-Y

7

$k_B$

9B → ⊗ 8 →

## RÉFÉRENCES CITÉES DANS LA DESCRIPTION

**Documents brevets cités dans la description**

- US 5863125 A
- US 5233385 A
- US 5448314 A
- US 617720 A
- US 20020109821 A
- EP 0749250 A